Europäisches Patentamt

European Patent Office

Office européen des brevets

(19)

(11) Numéro de publication: **0 280 600**
**B1**

(12) **FASCICULE DE BREVET EUROPEEN**

(45) Date de publication du fascicule du brevet:
**17.10.90**

(51) Int. Cl.⁵: **F16H 7/08**

(21) Numéro de dépôt: **88400246.0**

(22) Date de dépôt: **02.02.88**

(54) **Tendeur à commande hydraulique, notamment pour chaine.**

(30) Priorité: **09.02.87 FR 8701553**

(43) Date de publication de la demande:
**31.08.88 Bulletin 88/35**

(45) Mention de la délivrance du brevet:
**17.10.90 Bulletin 90/42**

(84) Etats contractants désignés:
**DE ES GB IT**

(56) Documents cités:
**DE-A- 3 609 233**
**FR-A- 2 350 518**
**FR-A- 2 526 908**
**US-A- 3 812 733**
**US-A- 4 657 524**

(73) Titulaire: **COMPAGNIE DES TRANSMISSIONS MECANIQUES SEDIS, Tour Avenir Ouest 64, Rue du 8 Mai 1945, F-92025 Nanterre Cédex(FR)**
Titulaire: **SACHS INDUSTRIES S.A. (HURET ET MAILLARD REUNIS), 60 Avenue Félix-Faure, F-92000 Nanterre(FR)**

(72) Inventeur: **Sosson Pierre, 68 av.G.Clémenceau Immeuble B, F-78500 Sartrouville(FR)**

(74) Mandataire: **Bressand, Georges et al, c/o CABINET LAVOIX 2 Place d'Estienne d'Orves, F-75441 Paris Cédex 09(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un tendeur à commande hydraulique, pour chaînes ou autres liens sans fin comme décrit dans le préambule de la revendication 1.

La demande de brevet français FR-A-2 526 908 décrit un tel tendeur hydraulique de chaîne pour moteur à combustion interne, comportant un piston creux servant à tendre la chaîne, monté de façon mobile en direction longitudinale dans un alésage d'un carter hydraulique, ledit piston étant raccordé à sa partie inférieure à une chambre de pression et comportant à sa partie supérieure tournée vers la chaîne un bouchon de laminage par lequel l'air peut s'échapper de l'intérieur du corps hydraulique. Entre le bouchon de laminage et la chambre de pression, est prévue une chambre de détente séparée de la chambre de pression par clapet anti-retour. Par ailleurs, la chambre de pression communique avec une avant-chambre par l'intermédiaire d'un clapet anti-retour à bille. Ladite avant chambre est elle-même reliée à un tube de projection d'huile par un clapet à bille limiteur de pression.

Le but de la présente invention est de perfectionner un tel tendeur hydraulique qui soit également capable de réduire les éventuels battements de la chaîne ou autre lien sans fin.

A cet effet, l'invention a pour objet un tendeur hydraulique pour chaîne ou autre lien sans fin, comme décrit dans la revendication 1, comportant un corps délimitant un logement cylindrique, un piston monté coulissant dans le logement, un patin de pression sollicité par le piston et en contact avec le lien sans fin, une chambre de haute pression délimitée par une partie du logement et le piston, ladite chambre de haute pression étant reliée à une source de fluide hydraulique sous pression par l'intermédiaire d'un clapet anti-retour, caractérisé en ce que la chambre de haute pression est étanche et ne comporte qu'une seule communication relié par le clapet anti-retour à la source de fluide hydraulique sous pression.

Selon d'autres caractéristiques:
- le logement comporte un fond et une paroi latérale cylindrique et la chambre de haute pression est délimitée par ce fond, une partie de ladite paroi cylindrique et une paroi d'extrémité du piston, ledit clapet anti-retour étant logé dans le piston et interdisant l'écoulement depuis la chambre de haute pression vers la source de fluide hydraulique sous pression;
- le corps comporte dans sa paroi latérale un orifice relié à la source de fluide hydraulique sous pression, le piston délimitant d'une part, avec la paroi latérale du corps, une chambre dans laquelle débouche l'orifice, et d'autre part une chambre intérieure, ces deux chambres communiquant par au moins un orifice ménagé dans la paroi latérale du piston, ladite chambre intérieure étant reliée à la chambre de haute pression par un passage ménagé dans la paroi d'extrémité du piston et dans lequel est logé le clapet anti-retour;
- la chambre intérieure, à son extrémité opposée à celle communiquant avec la chambre de haute pression comporte un gicleur projetant le fluide hydraulique sous pression vers la chaine ou autre lien sans fin;
- le corps comporte des moyens de limitation de la course du piston;
- lesdits moyens de limitation comportent un alésage logeant une goupille reçue en partie dans l'évidement circulaire du piston limitant la course vers l'extérieur du corps de ce dernier en venant en butée contre une paroi extrême dudit évidement circulaire;
- le piston comporte une rainure coopérant avec une goupille logée dans un alésage du corps pour bloquer le piston dans une position rentrée de prémontage sur organe ou de stockage;
- le piston comporte à sa surface externe une gorge munie d'un joint d'étanchéité entre ladite surface externe et la paroi latérale du logement.

L'invention va être décrite plus en détail ci-après en se référant aux dessins annexés, donnés uniquement à titre d'exemple et sur lesquels :

- la Figure 1 est une vue en coupe d'un tendeur selon l'invention, avant mise en place, dans sa position de pré-montage sur organe ou de stockage;
- la Figure 2 est une vue en coupe similaire à la Figure 1, le tendeur selon l'invention étant en service;
- la Figure 3 est une vue du tendeur de la Figure 1 prise suivant la flèche F de celle-ci.

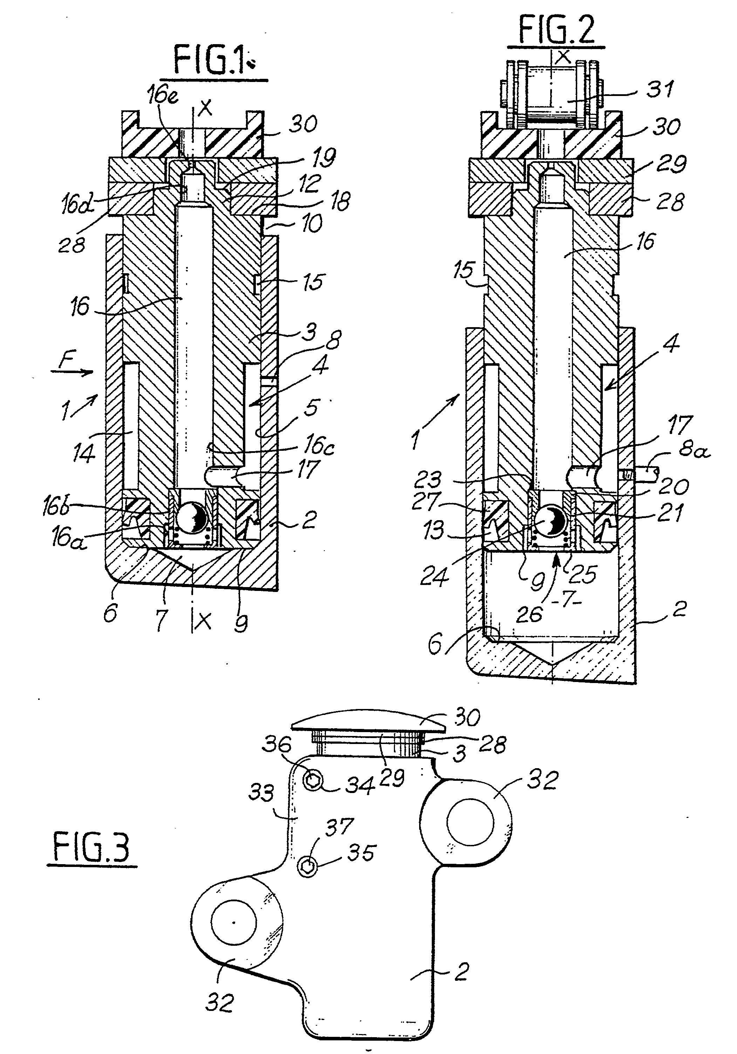

Les Figures 1 et 2 sont des vues en coupe d'un tendeur 1 comportant un corps cylindrique creux 2 ouvert à une extrémité et une piston 3 monté mobile dans celui-ci.

Dans le corps 2 est alésé selon l'axe X-X un logement 4 délimité par une paroi latérale cylindrique 5 et un fond 6. Une chambre 7 est usinée dans le fond 6. Cette chambre est axée sur l'axe X-X.

La paroi latérale 5 est percée d'un orifice radial 8 situé environ à égale distance du fond 6 du logement 4 et de l'extrémité ouverte de celui-ci afin de permettre l'alimentation en fluide hydraulique sous pression de la chambre intérieure formée par le logement 4 et la paroi latérale cylindrique 5.

Cet orifice radial 8 est relié par une canalisation 8a à cette source de fluide hydraulique sous pression (non représentée).

Le piston 3 comporte une extrémité plane 9 et une extrémité étagée 12. Sur sa surface cylindrique 10, le piston comporte à partir de son extrémité plane 9 tout d'abord une gorge 13 puis un évidement circulaire ou chambre 14 et enfin une rainure circulaire 15. Les trois éléments sont séparés les uns des autres. Le corps du piston est traversé par un alésage axial 16 étagé comportant cinq étages (16a, 16b, 16c, 16c, 16e) de diamètre décroissant depuis l'extrémité plane 9 du piston 3 jusqu'à son extrémité opposée.

L'étage 16a possède un diamètre inférieur au diamètre maximum de la chambre 7, celle-ci étant donc en partie obturée par l'extrémité plane 9 du piston 3.

L'évidement circulaire 14 est relié à l'étage 16c de l'alésage axial ou chambre intérieure 16 par un perçage radial 17.

L'extrémité étagée 12 du piston comporte deux étages de section décroissante formant ainsi deux épaulements 18, 19.

L'alésage 16b de l'alésage axial 16 reçoit une douille épaulée 20. Cette douille épaulée 20 a un diamètre intérieur inférieur au diamètre de l'alésage 16c et voisin de celui de l'alésage 16d de l'alésage axial 16. Le diamètre extérieur de l'épaulement de cette douille 20 est légèrement inférieur au diamètre de l'alésage 16b. La surface extérieure de la douille épaulée 20 comporte un dégagement cylindrique qui forme avec la surface cylindrique de l'alésage 16b un logement 21. Le dégagement s'étend depuis le dessous de l'épaulement de la douille 20 jusqu'à la deuxième extrémité de celle-ci. La première extrémité vient en appui sur un épaulement 23 entre les alésages 16b et 16c.

La deuxième extrémité de la douille 20 forme un siège pour une bille 24.

Un panier 25 cylindrique, percé de trous, est emmanché à force dans le logement 21, le fond du panier étant éloigné de ladite deuxième extrémité de la douille 20. Un ressort complète le clapet 26, prend appui sur le fond du panier et sollicite la bille 24 vers une position en appui sur son siège pour obturer l'orifice de la bague 20.

La gorge 13 prévue à la surface extérieure du piston reçoit un joint à lèvres 27 destiné à assurer l'étanchéité entre la surface externe 10 du piston et la paroi latérale 5 du corps 2.

Quelle que soit la position du piston 3, l'évidement circulaire 14 de celui-ci communique avec l'orifice 8.

Une rondelle 28 prend appui sur l'épaulement 18 de l'extrémité étagée 12 du piston 3 et une plaque d'appui 29 prend appui sur cette rondelle. Cette plaque d'appui 29 comporte un alésage coaxial avec l'axe du piston de diamètre au moins égal à celui du plus petit étage de l'extrémité étagée 12 du piston 3. Cette plaque d'appui est solidaire d'un patin de tension 30 destiné à être en contact avec une chaine 31 (voir Figure 2). Le patin 30 est percé d'un alésage coaxial avec l'axe du piston 3.

Sur la Figure 3, on remarque que le corps cylindrique 2 comporte en outre deux pattes de fixation 32 destinées à assurer la fixation du tendeur, par exemple, à l'intérieur d'un carter moteur. Le corps 2 comporte également une nervure 33 longitudinale entre son extrémité ouverte et une patte de fixation 32 du corps.

Dans cette nervure 33 sont percés deux alésages cylindriques 34 et 35 d'axes perpendiculaires au corps cylindrique et à peu près tangentiels à celui-ci.

Le piston 3 étant enfoncé dans le corps cylindrique 2 lors du stockage de l'ensemble, l'alésage 34 reçoit une goupille 36 dont une partie est située dans la rainure 15 pour bloquer le piston.

Dans l'alésage 35 est placée une goupille 37 dont une partie est logée dans l'évidement circulaire 14. Cette goupille 37 reste en place et limite la course du piston lorsque la goupille 36 est retirée pour rendre l'ensemble fonctionnel.

Le tendeur étant dans sa position de stockage ou de pré-montage est fixé à l'aide des pattes 32 par exemple sur une partie adéquate du carter moteur. L'alésage radial 8 est relié de manière classique non représentée à la pompe à huile du moteur.

La goupille 36 bloquant le piston est alors enlevée ce qui permet à celui-ci de faire saillie hors du corps cylindrique 2 pour amener le patin 30 au contact de la chaine 31.

En effet, la pompe à huile du moteur envoie de l'huile sous pression dans l'alésage axial 16 du piston par l'alésage 8, l'évidement circulaire 14, le perçage radial 17. Cette huile vient appuyer sur le dessus de la bille 24 et à l'encontre du ressort du clapet 26 éloigne la bille de son siège mettant en communication l'alésage axial 16 et la chambre 7 qui se remplit d'huile sous pression. Cette huile exerce une poussée sur l'extrémité 9 du piston 3 faisant saillir celui-ci hors du corps cylindrique 2, accroissant le volume de la chambre 7.

Lorsque le patin 30 vient au contact de la chaîne, une résistance au déplacement du piston se crée. Cette résistance entraîne une contre-pression dans la chambre de pression 7.

Cette contre-pression pousse la bille 24 vers son siège interrompant ainsi la communication précédemment établie. La chambre 7 devient fermée et étanche du fait de la présence du joint 27. Elle contient une quantité d'huile comportant un peu d'air sous forme d'émulsion.

La pompe à huile du moteur continuant à débiter, l'huile contenue dans l'alésage axial 16 est projetée sur la chaîne 31 au travers de l'étage 16e de l'alésage, qui constitue un gicleur, assurant ainsi la lubrification de ladite chaîne.

Lorsque la contre-pression devient plus importante, seul l'air contenu dans l'huile étant compressible, le piston 3 s'enfonce de manière infime dans le corps de cylindre 2 empêchant ainsi le battement de la chaîne.

Par suite d'usure, la chaîne s'allonge et crée une contre-pression moins importante dans la chambre 7. L'équilibre est alors rompu et la pression de l'huile fournie par la pompe à huile du moteur supprime le contact entre la bille 24 et son siège. L'huile pénètre sous pression dans la chambre 32 et repousse le piston 3 jusqu'à ce que le patin 31 exerce une pression suffisante sur la chaîne 31.

Ce dispositif comporte une chambre de pression relativement petite. Il ne comporte pas, dans ce mode de réalisation, de ressort entre le corps et le piston, ni de moyens du type bouchon de laminage pour évacuer l'air.

Sa construction et son usinage sont simples et ne nécessitent qu'un seul clapet anti-retour tout en permettant non seulement d'éviter le battement de la chaine mais de lubrifier celle-ci.

**Revendications**

1 - Tendeur hydraulique (1) pour chaîne (31) ou autre lien sans fin, comportant un corps (2) délimitant un logement (4) cylindrique, un piston (3) monté coulissant dans le logement, un patin de pression (30) sollicité par le piston et en contact avec le lien sans fin, une chambre de haute pression (7) délimitée par une partie du logement et le piston, ladite chambre de haute pression (7) étant reliée à une source de fluide hydraulique sous pression par l'intermédiaire d'un clapet anti-retour (26), caractérisé en ce que la chambre de haute pression (7) est étanche et ne comporte qu'une seule communication relié par le clapet anti-retour (26) à la source de fluide.

2 - Tendeur suivant la revendication 1, caractérisé en ce que le logement (4) comporte un fond (6) et une paroi latérale cylindrique (5) et la chambre de haute pression (7) est délimitée par ce fond, une partie de ladite paroi cylindrique (5) et une paroi d'extrémité (9) du piston, ledit clapet anti-retour (26) étant logé dans le piston (3).

3 - Tendeur suivant la revendication 1, caractérisé en ce que le corps (2) comporte dans sa paroi latérale (5) un orifice (8) relié à la source de fluide, le piston (3) délimitant d'une part, avec la paroi latérale (5) du corps, une chambre (14) dans laquelle débouche l'orifice (8), et d'autre part une chambre intérieure (16), ces deux chambres communiquant par au moins un orifice (17) ménagé dans une paroi latérale du piston, ladite chambre intérieure étant reliée à la chambre de haute pression (7) par un passage (16b) ménagé dans la paroi d'extrémité (9) du piston et logeant le clapet anti-retour (26).

4 - Tendeur suivant la revendication 3, caractérisé en ce que l'autre extrémité du piston comporte un gicleur (16e) projetant le fluide depuis la chambre intérieure (16), vers la chaine (31).

5- Tendeur suivant l'une quelconque des revendications précédentes, caractérisé en ce que le corps (2) comporte des moyens de limitation de la course du piston.

6 - Tendeur suivant la revendication 5, caractérisé en ce que lesdits moyens de limitation comportent un alésage (35) logeant une goupille (37) reçue en partie dans l'évidement circulaire (14) du piston limitant la course vers l'extérieur du corps (2) de ce dernier en venant en butée contre une paroi extrême dudit évidement circulaire.

7 - Tendeur suivant l'une quelconque des revendications précédentes, caractérisé en ce que le piston comporte une rainure (15) coopérant avec une goupille (36) logée dans un alésage (34) du corps (2) pour bloquer le piston dans une position rentrée de stockage.

8 - Tendeur suivant l'une quelconque des revendications précédentes, caractérisé en ce que le piston (3) comporte à sa surface externe voisin de ladite paroi d'extrèmité (9) du piston une gorge (13) munie d'un joint d'étanchéité (27) entre ladite surface externe et la paroi latérale (5) du logement (4).

## Patentansprüche

1. Hydraulischer Spanner (1) für eine Kette (31) oder ein anderes Endlosband, mit einem Körper (2), der eine zylindrische Lagerstelle (4) begrenzt, einem Kolben (3), der verschiebbar in der Lagerstelle angeordnet ist, einer Andruckkufe (30), die durch den Kolben angetrieben wird und in Anlage mit dem endlosen Band steht, einer Hochdruckkammer (7), die durch einen Abschnitt der Lagerstelle und durch den Kolben begrenzt wird, wobei die Hochdruckkammer (7) unter Zwischenschaltung eines Rückschlagventils (26) mit einer unter Druck stehenden hydraulischen Fluidquelle verbunden ist, dadurch gekennzeichnet, daß die Hochdruckkammer (7) dicht ist und nur eine einzige Verbindung aufweist, die über das Rückschlagventil (26) mit der Fluidquelle verbunden ist.

2. Spanner nach Anspruch 1, dadurch gekennzeichnet, daß die Lagerstelle (4) einen Boden (6) und eine zylindrische Seitenwand (5) aufweist und die Hochdruckkammer (7) durch diesen Boden, einen Teil der seitlichen Zylinderwand (5) und eine Stirnwand (9) des Kolbens begrenzt wird, und das Rückschlagventil (26) im Kolben (3) angeordnet ist.

3. Spanner nach Anspruch 1, dadurch gekennzeichnet, daß der Körper (2) in seiner Seitenwand (5) eine Öffnung (8) aufweist, die mit der Fluidquelle verbunden ist, der Kolben (3) einerseits mit der Seitenwand (5) des Körpers eine Kammer (14) begrenzt, in welcher die Öffnung (8) mündet, und andererseits eine Innenkammer (16), diese beiden Kammern über mindestens eine in einer Seitenwand des Kolbens angeordneten Öffnung (17) miteinander in Verbindung stehen, die Innenkammer mit der Hochdruckkammer (7) über einen Durchlauf (16b) in Verbindung steht, der in der Stirnwand (9) des Kolbens angeordnet ist und der das Rückschlagventil (26) aufnimmt.

4. Spanner nach Anspruch 3, dadurch gekennzeichnet, daß das andere Ende des Kolbens eine Düse (16e) aufweist, die das Fluid von der Innenkammer (16) gegen die Kette (31) spritzt.

5. Spanner nach irgendeinem der vorausgehenden Ansprüche, dadurch gekennzeichnet, daß der Körper (2) eine Begrenzungseinrichtung für die Kolbenbewegung aufweist.

6. Spanner nach Anspruch 5, dadurch gekennzeichnet, daß die Begrenzungseinrichtung eine Bohrung (35) umfaßt, die einen Stift (37) aufnimmt, der teilweise in einer kreisförmigen Ausnehmung (14) des Kolbens aufgenommen wird und die Bewegung des letzteren gegen das Äußere des Körpers (2) begrenzt, indem er als Anschlag gegen eine Endwand der kreisförmigen Ausnehmung gelangt.

7. Spanner nach irgendeinem der vorausgehenden Ansprüche, dadurch gekennzeichnet, daß der Kolben eine Nut (15) aufweist, die mit einem Stift (36) zusammenwirkt, der in einer Bohrung (34) des Körpers (2) angeordnet ist, um den Kolben in einer zurückgezogenen Lagerstellung zu sperren.

8. Spanner nach irgendeinem der vorausgehenden Ansprüche, dadurch gekennzeichnet, daß der Kolben (3) auf seiner Außenfläche benachbart der genannten Stirnwand (9) des Kolbens eine Auskehlung (13) aufweist, die einen Dichtungsring (27) zwischen der genannten Außenfläche und der Seitenwand (5) der Lagerstelle (4) aufnimmt.

## Claims

1. A hydraulic tensioning device (1) for a chain (31) or other endless connection, comprising a body (2) defining a cylindrical cavity (4), a piston (3) slidingly mounted in the cavity, a pressure shoe (30) acted upon by the piston and in contact with the endless connection, a high pressure chamber (7) defined by a part of the cavity and the piston, the said high pressure chamber (7) being connected to a source of hydraulic fluid under pressure through a non-return valve (26), characterised in that the high pressure chamber (7) is fluid-tight and comprises only one connection connected to the source of fluid through the non-return valve (26).

2. A tensioning device according to claim 1, characterised in that the cavity (4) comprises an end (6) and a cylindrical side wall (5), and the high pressure chamber (7) is defined by this end, a part of the said cylindrical wall (5) and an end wall (9) of the piston, the said non-return valve (26) being housed in the piston (3).

3. A tensioning device according to claim 1, characterised in that the body (2) comprises in its side wall (5) an orifice (8) connected to the source of fluid, the piston (3) defining on the one hand, with the side wall (5) of the body, a chamber (14) into which the orifice (8) opens out, and on the other hand an internal chamber (16), these two chambers communicating through at least one orifice (17) contrived in a side wall of the piston, the said internal chamber being connected to the high pressure chamber (7) by a passage (16b) contrived in the end wall (9) of the piston and housing the non-return valve (26).

4. A tensioning device according to claim 3, characterised in that the other end of the piston comprises a nozzle (16e) spraying the fluid from the internal chamber (16) towards the chain (31).

5. A tensioning device according to any one of the preceding claims, characterised in that the body (2) comprises means of limiting the stroke of the piston.

6. A tensioning device according to claim 5, characterised in that the said means of limiting comprise a bore (35) housing a pin (37) partly accommodated in the circular cavity (14) in the piston limiting the stroke of the latter towards the outside of the body (2) by abutting against an end wall of the said circular recess.

7. A tensioning device according to any one of the preceding claims, characterised in that the piston comprises a groove (15) interacting with a pin (36) housed in a bore (34) in the body (2) in order to lock the piston in a retracted storage position.

8. A tensioning device according to any one of the preceding claims, characterised in that the piston (3) comprises on its external surface adjacent to the said end wall (9) of the piston a groove (13) fitted with a sealing joint (27) between the said external surface and the side wall (5) of the cavity (4).

FIG.1

FIG.2

FIG.3